# EUROPEAN PATENT SPECIFICATION

(11) **EP 4 214 105 B1**
(45) Date of publication and mention of the grant of the patent: **20.03.2024**
(21) Application number: 20800077.8
(22) Date of filing: 28.10.2020
(51) Int. Cl.: B62D 21/14, B62D 31/00, B60J 5/02, B60J 5/04, B60K 1/04

(54) **ELECTRIC VEHICLE WITH FRONT ACCESS**
ELEKTROFAHRZEUG MIT FRONTZUGANG
VÉHICULE ÉLECTRIQUE À ACCÈS FRONTAL

(30) Priority: 17.09.2020 ES 202032026 U
(43) Date of publication of application: 26.07.2023
(73) Proprietor: Malena Engineering, SL, 47001 Valladolid (ES)
(72) Inventor: HASTEWELL CASANOVA, Michael, 08017 Barcelona (ES)
(74) Representative: Torner, Juncosa I Associats, SL
(86) International application number: PCT/EP2020/080312
(87) International publication number: WO 2022/058037

(56) References cited:
- EP-A1- 2 865 583
- WO-A1-2012/127459
- DE-C1- 4 413 970
- DE-U1-202009 007 273
- FR-A1- 2 952 894
- GB-A- 1 168 443

## Description

### Technical Field

The present invention relates to an electric vehicle with front access, i.e., to a vehicle provided with electric batteries and at least one electric motor for the operation of the wheels and which allows getting into same through a front door located in the front of the vehicle, in the direction of travel.

### State of the Art

Vehicles with front access are known, with one of the most well-known being the combustion vehicle sold under the trade name ISETTA and provided with four wheels with rear drive and front steering, two front seats accessible through a front door articulated on one side and a steering wheel attached to a steering shaft attached to said front door at its upper end and articulated with respect to the rest of the steering mechanism at its base, such that when the door opens, the steering wheel is moved out of the way, making it easier to get into the vehicle.

This vehicle is very compact, particularly in length, which is equivalent to the width of a conventional vehicle, which allows being parked cross-wise in parking spaces intended for the lengthwise parking of vehicles with a normal length.

As a result of the door with front access, it is possible to park in narrow spaces since the front access makes it unnecessary to leave spaces on the sides to enable opening side doors, as occurs in conventional vehicles.

In recent years, an electric version of said vehicle has also been developed, sold under the trade name MICROLINO. It has identical features, except for the incorporation of electric motors and batteries, and the use of a fixed steering column that is not moved out of the way when opening the front door.

Other vehicles with front access, some only as prototypes, are also known, such as for example the vehicles sold under the trade names HIRIKO and TATAAIRPOD.

HIRIKO is, furthermore, a folding vehicle, provided with a front portion and a rear portion of a chassis which are articulated to one another, allowing the front and rear wheels to be brought closer together by raising the central area of the vehicle, reducing its length. However, the modification of the length does not allow the space of the interior for passengers or for cargo to be increased, simply reducing the length of the vehicle for parking thereof, placing the passengers in a more upright position.

Furthermore, the aforementioned vehicles only have said access through the front door for passengers, only allowing access for a maximum of two passengers sitting in front seats, except the TATA AIRPOD, which also contemplates the passengers accessing rear seats placed facing away from the direction of travel through a door rear.

No vehicles with a front access allowing the interior space to be increased for receiving more cargo or more passengers behind the front seats by means of the extension of the chassis are known.

Telescopically movable extendable vehicles provided with a front portion and a rear portion of the chassis are known. Said known extendable vehicles include front seats accessible through side doors, both when the chassis is in a contracted position and when it is in an extended position.

Some examples of extendable vehicles are described in documents DE4418242A1, US20110169290A1, DE4413970 C1 and EP1167167A2.

Moreover, document GB 1 168 443 A discloses a vehicle with front access, comprising a chassis containing at least one front seat. The vehicle is provided with a front door for accessing the front seat through a front of the vehicle. The vehicle is further provided with front and rear wheels being operated by a motor. The chassis further comprises a front portion supporting the front wheels and said front door, and a rear portion supporting the rear wheels.

However, in the vehicles described in said documents the front seats are always accessible through side doors, so in the event of parking cross-wise in narrow spaces, with the chassis in the retracted position, said front seats will be hard to access due to the narrowness of the parking space with respect to said side doors.

Furthermore, in these extendable vehicles, the side doors providing access to the front seats have a limited extension that cannot be enlarged as it would interfere with the rear portion of the chassis in the retracted position, and therefore they do not allow a comfortable access, without folding the front seats, to the rear seats with the chassis in the extended position.

The solution commonly used in these extendable vehicles is to include a side door for specifically accessing the rear seats, which is concealed or disabled when the chassis is in the retracted position, and is exposed and enabled when the chassis is in the extended position.

However, this solution requires a considerable extension of the chassis to leave sufficient space for including a wide enough rear door for comfortable access to the rear seats, unnecessarily increasing the total length of the vehicle, or it limits the size of the rear doors, with the access to said rear seats therefore being uncomfortable. The longer the length of the extension, the more complicated the construction is, the heavier it is, and the more expensive the chassis will be.

It is therefore concluded that there is no known telescopically extendable vehicle which offers comfortable side access to the interior space behind the front seats when the chassis is in the extended position, without requiring an excessive extension of the chassis.

### Brief Description of the Invention

The present invention relates to an electric vehicle with front access.

Spatial references such as front, rear, side, or the like will be understood as being in reference to the normal direction of travel of the vehicle.

The proposed electric vehicle with front access comprises, in a manner that is known in the state of the art:
- a chassis, containing at least one front seat, provided with a front door for accessing said at least one front seat through a front of the vehicle;
- front wheels and rear wheels;
- at least one electric motor connected to a set of electric batteries fixed to the chassis and operating said rear wheels and/or front wheels.

Therefore, the proposed vehicle consists of a chassis, a drive unit formed by electric batteries, preferably integrated in the base of the chassis constituting the floor of the interior space of the chassis, and at least one electric motor powered by said batteries and operating the rear and/or front wheels.

The chassis surrounds an interior space containing at least one front seat for an occupant, i.e., at least one seat intended for an occupant, facing the direction of travel of the vehicle. Said interior space is accessible through a front door located in the front of the vehicle in the direction of travel, allowing users to get into or out of the interior space of the chassis through said front of the vehicle.

This makes the access easier for the users of said at least one front seat when the vehicle is parked perpendicular to the curb, i.e., transverse to the direction of circulation, with the front end of the chassis being accessible from the sidewalk, or from a space intended for the pedestrians separated from the circulation lane by the parking lane.

However, said electric vehicle with front access furthermore proposes in a manner that is not known in the available state of the art, the inclusion in the chassis of the following features:
- a front portion, supporting the front wheels, said front door and at least one side door for accessing the inside of the chassis through a side of the vehicle, and
- a rear portion, supporting the rear wheels;
- wherein said front and rear portions of the chassis are partially overlapping and are telescopically movable between a retracted position, to make it easier to park the vehicle, and an extended position increasing the separation between the front and rear wheels, to increase an inner space of the chassis behind said at least one front seat; and in that
- said at least one side door and the rear portion of the chassis are partially superimposed in the retracted position of the chassis, disabling the opening of the mentioned at least one side door, and are not superimposed in the extended position of the chassis, enabling the opening of the mentioned at least one side door, providing access to the interior space of the chassis behind said at least one front seat and also optionally to said at least one front seat.

That is, the chassis will be split into a front portion and a rear portion movably connected to one another in the longitudinal direction of the vehicle, allowing the separation existing between the front wheels, connected to the front portion of the chassis, and the rear wheels, connected to the rear portion of the chassis, to be changed.

The connection between the front portion and rear portion will be done through an extending mechanism which will block the relative position between the front and rear portions, except during the extension or retraction operations of the chassis. The blocking between the front and rear portions of the chassis will be sufficient for withstanding impacts received by the chassis in the event of an accident without causing the front and rear portions to collapse or to improperly separate from one another.

Said extending mechanism will typically also include longitudinal guiding elements both in the front portion and in the rear portion, inserted in one another, which allows a guided longitudinal movement between both portions.

Said guiding elements may be located at the base of the chassis, and preferably also on parts of the sides and/or the roof of the chassis.

The front and rear portions of the chassis will be partially overlapping both in the retracted position and in the extended position, with the largest overlap being in the retracted position.

The front portion of the chassis also includes at least one side door, accessible from a side of the vehicle, which will provide access to the interior space of the chassis.

Said at least one side door has a size such that the opening covered by said side door, and the side door itself, is partially covered by part the rear portion of the chassis, the chassis being in the retracted position, preventing it from opening.

When the chassis is in the extended position, the opening covered by the side door, and the side door itself, are completely free of the rear portion of the chassis, without any overlap, allowing the opening of said side door and the access to the interior space through same.

The blocking of the side door in the retracted position is not any drawback, because in the retracted position the vehicle only has front seats, which are more readily accessible through the front door when parking the vehicle perpendicular to the curb when it is in the retracted position.

At the same time, said configuration allows a large side door which, in the extended position of the chassis, allows comfortable access to the interior space of the chassis located behind the at least one front seat by performing a minimum extension of the length of the vehicle. Said side door can also simultaneously allow comfortable access to the front seats.

Therefore, this configuration allows going from a vehicle provided with only front seats, which has a small length and can therefore be parked perpendicular to the curb in spots usually provided for parallel parking, with said front seats being accessible through the front door, to a vehicle with front seats and with rear seats, which has a longer length and therefore must be parked in parallel, the rear seats and optionally also the front seats therefore being accessible through the side door. This allows achieving better accessibility both in the retracted position and in the extended position.

According to an embodiment of the invention, the vehicle may include an operating control lever or a steering wheel for controlling the operation of the vehicle, accessible from said at least one front seat, which will constitute a driving seat.

Preferably said chassis will contain two front seats. In such case:
- said operating control lever may be located in a central position between said two front seats, one of them constituting a driving seat; or
- said steering wheel may be opposite one of said front seats, constituting a driving seat; or
- said steering wheel may be articulated between an operative position opposite one of said front seats, constituting a driving seat, and an inoperative position not opposite either of said front seats, making access through the front door easier.

It is also proposed for the interior space of the chassis, behind said at least one front seat, to be able to contain, in the extended position, at least one rear seat, or preferably two or three rear seats.

According to an embodiment of the invention, said chassis will contain two front seats, and the chassis will include two side doors on opposite sides thereof.

In such case, the interior space of the chassis behind said two front seats will contain at least two rear seats, accessible through the two side doors.

The front door preferably contains a windshield and is articulated by an upper part to the front portion of the chassis. Said front door therefore opens upwards, leaving free access to the front seats.

Each side door may incorporate a transparent panel, typically in its upper half and preferably made of glass, and articulated by a front portion to said front portion of the chassis. The articulation in the front portion allows opening the side door of the vehicle by swiveling it outwards.

The transparent panel can be retractable, i.e., it can be concealed within the non-transparent part of the side door. Said transparent panel will be partially covered by said rear portion of the chassis in the retracted position.

The chassis includes a reversible bidirectional extending mechanism which, responding to an actuator, provides the telescopic movement of said front and rear portions of the chassis.

Said extending mechanism comprises a rack and pinion assembly integrated in the floor of the chassis and said actuator is a manually operated lever accessible from said at least one front seat or an automatic electric actuator, such as an electric motor for example.

According to another embodiment, said at least one electric motor is comprised of at least two independent electric motors, each connected to one of the rear wheels. The independent operation of each of the rear wheels allows the steering of the vehicle to be controlled.

In such case, said front wheels can lack steering, i.e., they cannot rotate about a vertical shaft, changing the direction thereof, lack steering and have a smaller width than the rear wheels, or lack steering and said at least one electric motor may also include two independent electric motors, each connected to one of the front wheels.

The distinguished operation of the wheels of opposite sides of the vehicle allows rotations to be produced without needing the front wheels to be provided with steering, for large turning radii the lack of front steering does not entail any problem, and for very small turning radii, the smaller width of the front wheels exceptionally allows the wheels to skid sideways during very sharp turns at a very low speed. An electronic limiter is also proposed to be included which limits the maximum turning radius of the vehicle to prevent or minimize said sideways skidding, or to adapt the turning radius allowed based on the speed of the vehicle, thereby allowing the vehicle to be able to dispense with steering in all the wheels of the vehicle, lessening costs and resulting in a more reliable and more compact vehicle.

The inclusion of at least one rear hatch providing access, through the rear of the vehicle, to the mentioned interior space of the chassis behind said at least one front seat is also proposed.

Said at least one rear hatch may also include a rear window.

The at least one rear hatch includes an upper hatch consisting of or integrating a rear window, articulated by an upper part to the rear portion of the chassis, and a lower hatch articulated by a lower part to the rear portion of the chassis.

Preferably, the electric batteries are entirely supported in the front portion of the chassis.

According to another embodiment, the front wheels, or wheel arches, integrated in the chassis, containing said front wheels, protrude towards the front with respect to a central region of the front of the chassis containing the front door, acting as a bumper.

It is also proposed for the front portion and the rear portion of the chassis, in the retracted position, to be outwardly flush with one another, part of the front portion being contained within the rear portion. Aerodynamic friction of the assembly in the retracted position is thereby minimized.

Other features of the invention will become apparent in the following detailed description of an embodiment.

### Brief Description of the Figures

The aforementioned and other advantages and features will be more fully understood from the following detailed description of an embodiment in reference to the attached drawings which must be interpreted in an illustrative and non-limiting manner, wherein:

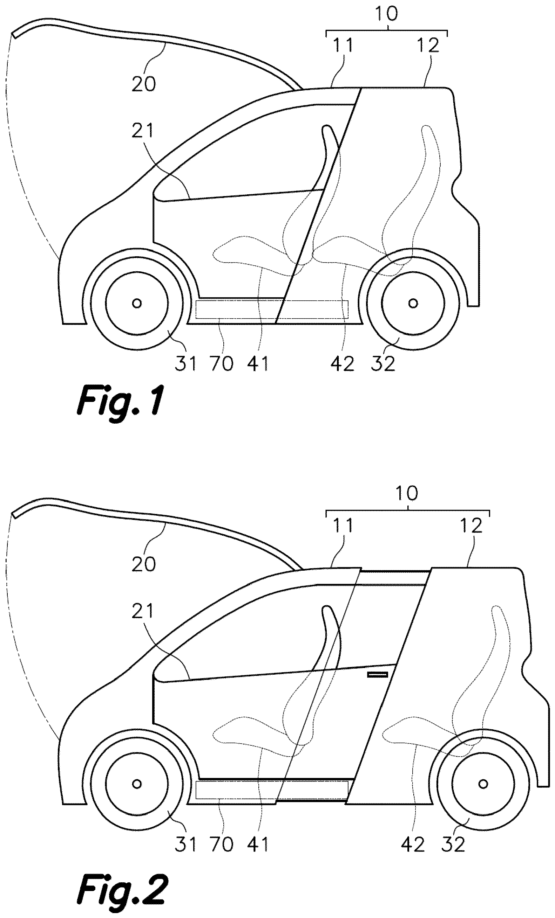

Figure 1 shows a schematic side view of the vehicle with the chassis in the retracted position, with the front door open;
Figure 2 shows a schematic side view of the vehicle with the chassis in the extended position, with the front door open;

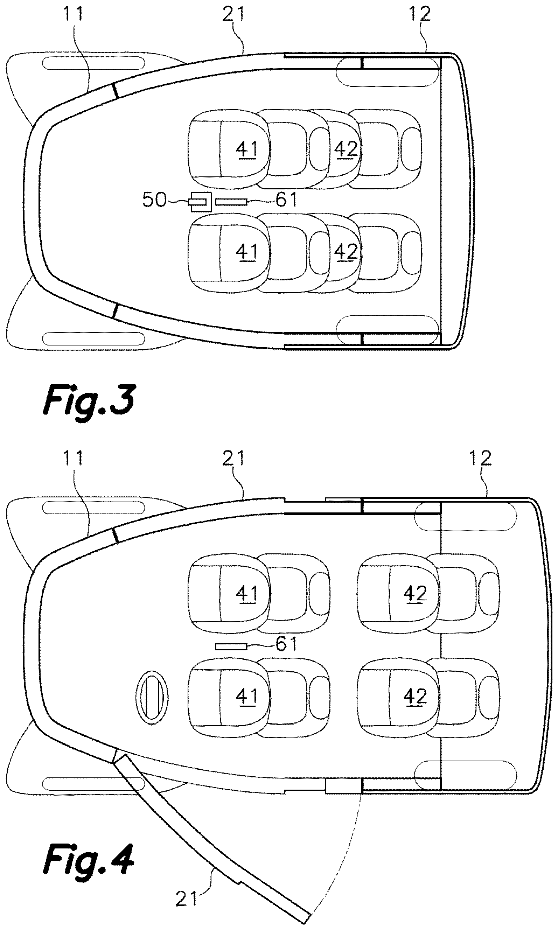

Figure 3 shows a schematic plan view of the vehicle with the chassis in the retracted position;
Figure 4 shows a schematic plan view of the vehicle with the chassis in the extended position, with a side door open;

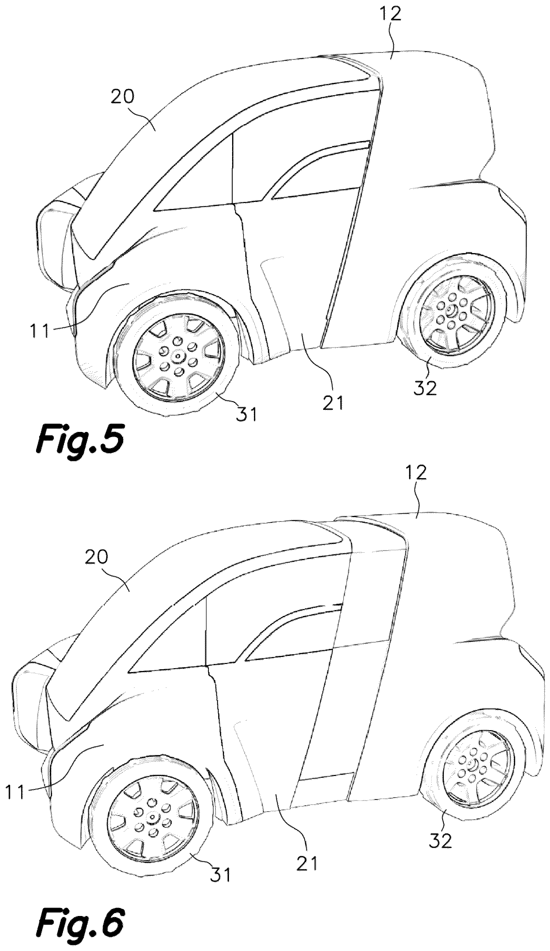

Figure 5 shows a schematic perspective view of the vehicle with the chassis in the retracted position;
Figure 6 shows a schematic perspective view of the vehicle with the chassis in the extended position;

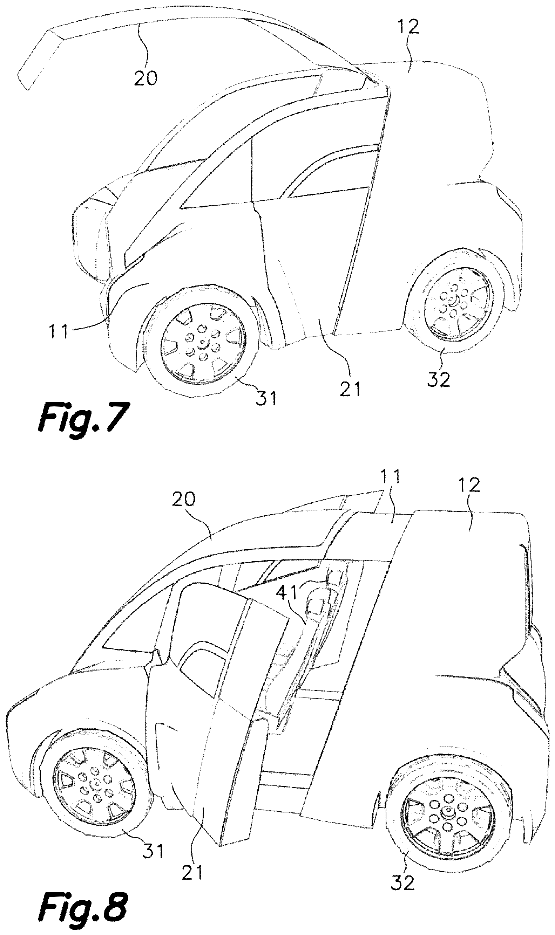

Figure 7 shows a schematic perspective view of the vehicle with the chassis in the retracted position, with the front door open;
Figure 8 shows a schematic perspective view of the vehicle with the chassis in the extended position, with the side doors open;

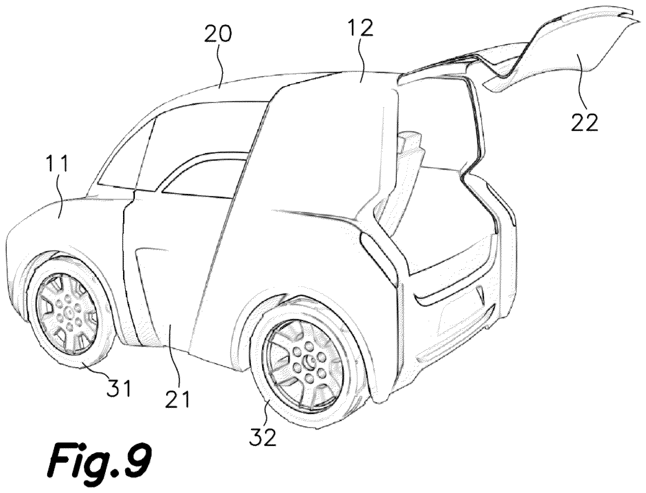

Figure 9 shows a schematic perspective view of the vehicle with the chassis in the retracted position, with the rear hatch open.

### Detailed Description of an Embodiment

The appended figures show illustrative non-limiting embodiments of the present invention.

The present invention relates to a vehicle with two front wheels 31 and two rear wheels 32 attached, by means of an interposed suspension, to a chassis 10 that surrounds an interior space of the vehicle.

The chassis 10 and front wheel 31 and rear wheel 32 assembly defines a direction of travel of the vehicle, which determines a front, a rear and two sides of the vehicle, where those elements of the vehicle closest to the front of said vehicle are front elements, and those elements closest to the rear of the vehicle are rear elements.

The chassis 10 has a floor where electric batteries are integrated, and each of the rear wheels 32 is operated by means of an independent electric motor, for example, an electric motor integrated in the drum of the wheel, connected to the rest of the vehicle through the suspension.

The independent operation of each of the rear wheels 32 allows the steering of the vehicle to be controlled.

Within the interior space defined by the chassis 10 there are two front seats 41, one next to the other, in the direction of travel of the vehicle.

An operating control lever 50, or a steering wheel, accessible from one of said front seats 41, constituting the driving seat, is also included.

According to the example shown in the figures, the operating control lever 50 is located between the two front seats 41, being accessible from both.

The use of a fixed steering wheel, or a steering wheel attached to the end of an articulated arm which, in the operative position is opposite one of the front seats, said seat constituting the driving seat, is alternatively contemplated.

Behind the front seats 41 the rest of the interior space, located behind said front seats 41, is a cargo space or contains two or three rear seats, also next to one another and in the direction of travel of the vehicle.

The chassis 10 is an extendable chassis, formed by a front portion 11 and a rear portion 12 that are telescopic in the direction of travel and partially overlapping.

The front portion 11 supports the front wheels 31 and the electric battery 70 or part thereof, the rear portion 12 supports the rear wheels 32 and their electric motors, and both front portion 11 and rear portion 12 are attached to one another by means of sliding guides and a bidirectional extending mechanism which allows regulating the movement of the front portion 11 with respect to the rear portion 12 between a retracted position, in which the distance between the front wheels 31 and rear wheels 32 is minimum, and an extended position in which the distance between the front wheels 31 and rear wheels 32 is maximum.

The extending mechanism is also responsible for setting the position between the front portion 11 and rear portion 12 when the extension or retraction of the chassis 10 ends, the front portion 11 and rear portion 12 assembly being fixed so as to be resistant to impacts without collapsing.

The extending mechanism is operated by means of an actuator 61, for example, a rack and pinion assembly operated manually or by means of an electric motor.

Other extending mechanisms are also contemplated, such as a screw mechanism.

Said extending mechanism is integrated in the base of the chassis 10, and the manual operating element is located between the two front seats 41.

The front portion 11 of the chassis 10 also includes a front door 20 which allows the front seats 41 to be accessed through the front of the vehicle, and two side doors 21 which allow the rear seats 42 or cargo space located behind the front seats 41 to be accessed, in the extended position of the chassis 10, through the sides of the vehicle, and also allowing the front seats 41 to be accessed.

The front door 20 includes the windshield of the vehicle and is articulated by an upper end to the front portion 11 of the chassis, which allows opening the door by swiveling it upwards.

The side doors 21 include a transparent panel in their upper half, which could be at least partially retractable into the side door 21. Each side door 21 will be articulated by a front end to the front portion 12 of the chassis 10, which allows opening the door by swiveling it.

The side doors 21 have a considerable size, which covers most of the sides of the front portion 11 of the chassis 10 such that, when opened, it provides a large access to the interior space of the chassis 10, both to the front seats 41 and to the rear seats 42, or to the cargo space.

Each side door 21 includes a portion which, in the retracted position of the chassis 10, overlaps the rear portion 12 of the chassis 10, preventing it from opening and disabling it. Preferably said portion of the side door 21 is located inside the rear portion 12 of the chassis 10, covering its outer handle.

In the extended position of the chassis 10, the side doors 21 do not overlap the rear portion 12 of the chassis 10, being completely accessible and the opening thereof being allowed.

The inclusion of a rear hatch 22 providing access to the interior space through the rear of the vehicle for accessing the cargo space is also proposed.

The rear seats 42 can be folded, allowing a very compact retracted position of the chassis, or allowing the entire interior space behind the front seats 41 to be used as a cargo space, both in the retracted position and in the extended position of the chassis.

In one embodiment, both the front wheels 31 and the rear wheels 32 lack steering, with the steering of the vehicle being controlled by the independent operation of the wheels on opposite sides the vehicle, for example, the rear wheels 32.

In the case of turns with a wide radius, the lack of steering does not represent any problem, and in cases of turns with a small radius, it is proposed for the front wheels 31 to have a smaller width than the rear wheels 32, allowing in extreme cases and at a low speed, such as in parking maneuvers, the side skidding of the front wheels 31 to occur.

It is also proposed for each of the front wheels 31 to include an independent electric motor, its operation combined with the operation of the rear wheels 32 allowing a precise control of the steering of the vehicle.

The inclusion of steering in the front wheels 31 is also evidently considered.

A control device is configured to brake the front wheels 31 and to unbrake the rear wheels 32, or vice-versa, during the movement between the retracted position and the extended position, and optionally to actuate the unbraked wheels to facilitate or to produce said movement.

## Claims

1. An electric vehicle with front access, comprising:
• a chassis (10), containing at least one front seat (41), provided with a front door (20) for accessing said at least one front seat (41) through a front of the vehicle;
• front wheels (31) and rear wheels (32);
• at least one electric motor operating said rear wheels (31) and/or front wheels (32) and connected to a set of electric batteries (70) fixed to the chassis;
wherein said chassis further comprises:
• a front portion (11), supporting the front wheels (31), said front door (20), and at least one side door (21) for accessing the inside of the chassis through a side of the vehicle, and
• a rear portion (12), supporting the rear wheels (32);
• wherein said front portion (11) and rear portion (12) of the chassis are partially overlapped and are telescopically movable between a retracted position, to make it easier to park the vehicle, and an extended position increasing the separation between the front wheels (31) and rear wheels (32), to increase an inner space of the chassis (10) behind said at least one front seat (41); and wherein
• said at least one side door (21) and the rear portion (12) of the chassis are partially superimposed in the retracted position of the chassis (10), disabling the opening of the mentioned at least one side door (21), and are not superimposed in the extended position of the chassis (10), enabling the opening of the mentioned at least one side door (21), providing access to the interior space of the chassis (10) behind said at least one front seat (41) and also optionally to said at least one front seat (41).

2. The vehicle according to claim 1, wherein it further includes an operating control lever (50) or a steering wheel, controlling the operation of the vehicle, accessible from said at least one front seat (41) which constitutes a driving seat.

3. The vehicle according to claim 2, wherein said chassis contains two front seats (41) and wherein:
• said operating control lever (50) is located in a central position between said two front seats (41), one of them constituting a driving seat; or
• said steering wheel is opposite one of said front seats (41), constituting a driving seat; or
• said steering wheel is articulated between an operative position opposite one of said front seats (41), constituting a driving seat, and an inoperative position not opposite either of said front seats (41).

4. The vehicle according to any one of the preceding claims, wherein said interior space of the chassis (10) behind said at least one front seat (41) contains, in the extended position, at least one rear seat (42).

5. The vehicle according to any one of the preceding claims, wherein said chassis (10) contains two front seats (41), the chassis (10) includes two side doors (21) on opposite sides thereof, and said interior space of the chassis (10) behind said two front seats (41) contains at least two rear seats (42), accessible through the two side doors (21).

6. The vehicle according to claim 1, wherein said front door (20) contains a windshield and is articulated by an upper part to the front portion (11) of the chassis; and/or
each side door (21) incorporates a transparent panel and is articulated by a front portion to said front portion (11) of the chassis.

7. The vehicle according to claim 1, wherein the chassis includes a reversible bidirectional extending mechanism actuated by an actuator (61) providing the telescopic movement of said front portion and rear portion of the chassis, or a reversible bidirectional extending mechanism comprising a rack and pinion assembly integrated in a floor of the chassis, actuated by an actuator (61) or actuated by an actuator (61) consisting in a manually operated lever accessible from said at least one front seat or in an automatic electric actuator, providing the telescopic movement of said front portion (11) and rear portion (12) of the chassis.

8. The vehicle according to claim 1, wherein said at least one electric motor is comprised of at least two independent electric motors, each connected to one of the rear wheels (32).

9. The vehicle according to claim 11, wherein said front wheels (31):
• lack steering; or
• lack steering and have a smaller width than the rear wheels (32); or
• lack steering and said at least one electric motor also includes two independent electric motors, each connected to one of the front wheels (31).

10. The vehicle according to claim 1, wherein the front wheels (31) and/or the rear wheels (32) are steerable.

11. The vehicle according to claim 1, wherein the vehicle includes at least one rear hatch (22), or at least one rear hatch including a rear window, or at least one rear hatch including an upper hatch consisting of or integrating a rear window, articulated by an upper part to the rear portion of the chassis, and optionally a lower hatch articulated by a lower part to the rear portion of the chassis, the at least one rear hatch providing access to the mentioned interior space of the chassis (10) behind said at least one front seat (41) through a rear of the vehicle.

12. The vehicle according to any one of the preceding claims, wherein the electric batteries are entirely supported in the front portion (11) of the chassis.

13. The vehicle according to any one of the preceding claims, wherein the front wheels (31), or wheel arches of the chassis containing the front wheels (31), protrude towards the front with respect to a central region of the front of the chassis containing the front door (20), said protruding front wheels (31) or wheel arches acting as a bumper.

14. The vehicle according to any one of the preceding claims, wherein in the retracted position, the front portion (11) and the rear portion (12) of the chassis are outwardly flush with one another, with a part of the front portion (11) being contained within the rear portion (12).

15. The vehicle according to any preceding claim wherein a control device is configured to brake the front wheels (31) and to unbrake the rear wheels (32), or vice-versa, during the movement between the retracted position and the extended position, and to actuate the unbraked front or rear wheels (31, 32) to facilitate or to produce the movement between the retracted position and the extended position.

## Patentansprüche

1. Elektrofahrzeug mit Frontzugang, Folgendes umfassend:
ein Chassis (10), das mindestens einen Vordersitz (41) enthält, der mit einer Vordertür (20) für den Zugang zu dem mindestens einen Vordersitz (41) über eine Frontseite des Fahrzeugs bereitgestellt ist;
Vorderräder (31) und Hinterräder (32);
mindestens einen Elektromotor, der die Hinterräder (31) und/oder die Vorderräder (32) betreibt und mit einem Satz elektrischer Batterien (70) verbunden ist, die an dem Chassis fixiert sind;
wobei das Chassis ferner Folgendes umfasst:
einen Vorderabschnitt (11), der die Vorderräder (31), die Vordertür (20) und mindestens eine Seitentür (21) für den Zugang zum Inneren des Chassis über eine Seite des Fahrzeugs trägt, und
einen Hinterabschnitt (12), der die Hinterräder (32) trägt;
wobei der Vorderabschnitt (11) und der Hinterabschnitt (12) des Chassis sich teilweise überlappen und teleskopisch zwischen einer eingezogenen Position, um das Einparken des Fahrzeugs zu erleichtern, und einer ausgezogenen Position, in der sich der Abstand zwischen den Vorderrädern (31) und den Hinterrädern (32) vergrößert, bewegbar sind, um einen Innenraum des Chassis (10) hinter dem mindestens einen Vordersitz (41) zu vergrößern; und wobei
die mindestens eine Seitentür (21) und der Hinterabschnitt (12) des Chassis in der eingezogenen Position des Chassis (10) teilweise übereinander liegen, wobei die Öffnung der mindestens einen Seitentür (21) unterbunden wird, und in der ausgezogenen Position des Chassis (10) nicht übereinander liegen, wobei die Öffnung der mindestens einen Seitentür (21) ermöglicht wird, wobei Zugang zum Innenraum des Chassis (10) hinter dem mindestens einen Vordersitz (41) und gegebenenfalls auch zu dem mindestens einen Vordersitz (41) bereitgestellt wird.

2. Fahrzeug nach Anspruch 1, **dadurch gekennzeichnet, dass** es ferner einen Betriebskontrollhebel (50) oder ein Lenkrad einschließt, wobei der Betrieb des Fahrzeugs gesteuert wird und das von dem mindestens einen Vordersitz (41), der einen Fahrersitz darstellt, zugänglich ist.

3. Fahrzeug nach Anspruch 2, wobei das Chassis zwei Vordersitze (41) enthält und wobei:
der Betriebskontrollhebel (50) sich in einer mittleren Position zwischen den beiden Vordersitzen (41) befindet, wobei einer von ihnen einen Fahrersitz darstellt; oder
das Lenkrad gegenüber einem der Vordersitze (41) liegt, der einen Fahrersitz darstellt, oder
das Lenkrad zwischen einer Betriebsposition gegenüber einem der Vordersitze (41), die einen Fahrersitz darstellen, und einer Nichtbetriebsposition, die keinem der beiden Vordersitze (41) gegenüberliegt, angelenkt ist.

4. Fahrzeug nach einem der vorhergehenden Ansprüche, wobei der Innenraum des Chassis (10) hinter dem mindestens einen Vordersitz (41) in der ausgezogenen Position mindestens einen Hintersitz (42) enthält.

5. Fahrzeug nach einem der vorhergehenden Ansprüche, wobei das Chassis (10) zwei Vordersitze (41) enthält, das Chassis (10) zwei Seitentüren (21) auf gegenüberliegenden Seiten davon einschließt, und der Innenraum des Chassis (10) hinter den beiden Vordersitzen (41) mindestens zwei Hintersitze (42) enthält, die durch die beiden Seitentüren (21) zugänglich sind.

6. Fahrzeug nach Anspruch 1, wobei die Vordertür (20) eine Windschutzscheibe enthält und mit einem Oberteil an dem Vorderabschnitt (11) des Chassis angelenkt ist; und/oder jede Seitentür (21) eine durchsichtige Scheibe beinhaltet und mit einem Vorderabschnitt an dem Vorderabschnitt (11) des Chassis angelenkt ist.

7. Fahrzeug nach Anspruch 1, wobei das Chassis einen reversiblen bidirektionalen Ausfahrmechanismus einschließt, der durch einen Aktuator (61) betätigt wird, der die teleskopische Bewegung des Vorderabschnitts und des Hinterabschnitts des Chassis bereitstellt, oder einen reversiblen bidirektionalen Ausfahrmechanismus, der eine in einen Boden des Chassis integrierte Zahnstangenanordnung umfasst, die durch einen Aktuator (61) betätigt wird oder durch einen Aktuator (61) betätigt wird, der aus einem manuell betätigten Hebel besteht, der von dem mindestens einen Vordersitz aus zugänglich ist, oder aus einem automatischen elektrischen Aktuator, der die teleskopische Bewegung des Vorderabschnitts (11) und des Hinterabschnitts (12) des Chassis bereitstellt.

8. Fahrzeug nach Anspruch 1, wobei der mindestens eine Elektromotor mindestens zwei unabhängige Elektromotoren umfasst, die jeweils mit einem der Hinterräder (32) verbunden sind.

9. Fahrzeug nach Anspruch 11, wobei die Vorderräder (31):
keine Lenkung haben; oder
keine Lenkung haben und eine geringere Breite als die Hinterräder (32) aufweisen; oder
keine Lenkung haben und der mindestens eine Elektromotor auch zwei unabhängige Elektromotoren einschließt, die jeweils mit einem der Vorderräder (31) verbunden sind.

10. Fahrzeug nach Anspruch 1, wobei die Vorderräder (31) und/oder die Hinterräder (32) lenkbar sind.

11. Fahrzeug nach Anspruch 1, wobei das Fahrzeug mindestens eine Hinterklappe (22) oder mindestens eine Hinterklappe einschließlich eines Hinterfensters oder mindestens eine Hinterklappe einschließlich einer oberen Klappe, die aus einem Hinterfenster besteht oder dieses integriert und mit einem Oberteil an den Hinterabschnitt des Chassis angelenkt ist, und gegebenenfalls eine untere Klappe, die mit einem Unterteil an den Hinterabschnitt des Chassis angelenkt ist, einschließt, wobei die mindestens eine Hinterklappe den Zugang zu dem Innenraum des Chassis (10) hinter dem mindestens einen Vordersitz (41) durch eine Hinterseite des Fahrzeugs ermöglicht.

12. Fahrzeug nach einem der vorhergehenden Ansprüche, wobei die elektrischen Batterien vollständig in dem Vorderabschnitt (11) des Chassis getragen werden.

13. Fahrzeug nach einem der vorhergehenden Ansprüche, wobei die Vorderräder (31) oder Radbögen des Chassis, das die Vorderräder (31) enthält, in Bezug auf eine zentrale Region an der Vorderseite des Chassis, die die Vordertür (20) enthält, nach vorne vorstehen, wobei die vorstehenden Vorderräder (31) oder Radbögen als Stoßfänger wirken.

14. Fahrzeug nach einem der vorhergehenden Ansprüche, wobei in der eingezogenen Position der Vorderabschnitt (11) und der Hinterabschnitt (12) des Chassis nach außen hin bündig miteinander sind, wobei ein Teil des Vorderabschnitts (11) innerhalb des Hinterabschnitts (12) enthalten ist.

15. Fahrzeug nach einem der vorhergehenden Ansprüche, wobei eine Steuervorrichtung ausgebildet ist, um während der Bewegung zwischen der eingezogenen Position und der ausgezogenen Position die Vorderräder (31) zu bremsen und die Hinterräder (32) zu entbremsen, oder umgekehrt, und um die ungebremsten Vorder- oder Hinterräder (31, 32) zu betätigen, um die Bewegung zwischen der eingezogenen Position und der ausgezogenen Position zu ermöglichen oder zu erzeugen.

## Revendications

1. Véhicule électrique à accès frontal, comprenant :
• un châssis (10), contenant au moins un siège avant (41), pourvu d'une porte avant (20) pour l'accès audit au moins un siège avant (41) á travers une partie avant du véhicule ;
• des roues avant (31) et des roues arrière (32) ;
• au moins un moteur électrique actionnant lesdites roues arrière (31) et/ou roues avant (32) et relié à un ensemble de batteries électriques (70) fixées au châssis ;
dans lequel ledit châssis comprend en outre :
• une partie avant (11), supportant les roues avant (31), ladite porte avant (20) et au moins une porte latérale (21) pour l'accès à l'intérieur du châssis à travers un côté du véhicule, et
• une partie arrière (12), supportant les roues arrière (32) ;
• dans lequel ladite partie avant (11) et ladite partie arrière (12) du châssis se chevauchent partiellement et peuvent se déplacer de façon télescopique entre une position rétractée, pour faciliter le stationnement du véhicule, et une position déployée augmentant la séparation entre les roues avant (31) et les roues arrière (32), pour augmenter un espace intérieur du châssis (10) derrière ledit au moins un siège avant (41) ; et dans lequel
• ladite au moins une porte latérale (21) et la partie arrière (12) du châssis sont partiellement superposées dans la position rétractée du châssis (10), empêchant l'ouverture de ladite au moins une porte latérale (21), et ne sont pas superposées dans la position déployée du châssis (10), permettant l'ouverture de ladite au moins une porte latérale (21), donnant accès à l'espace intérieur du châssis (10) derrière ledit moins un siège avant (41) et aussi optionnellement audit au moins un siège avant (41).

2. Véhicule selon la revendication 1, dans lequel il comporte en outre un levier de commande de fonctionnement (50) ou un volant, commandant le fonctionnement du véhicule, accessible depuis ledit au moins un siège avant (41) qui constitue un siège de conduite.

3. Véhicule selon la revendication 2, dans lequel ledit châssis contient deux sièges avant (41) et dans lequel :
• ledit levier de commande de fonctionnement (50) est situé dans une position centrale entre lesdits deux sièges avant (41), l'un desquels constitue un siège de conduite ; ou
• ledit volant est en regard d'un desdits sièges avant (41), qui constitue un siège de conduite ; ou
• ledit volant est articulé entre une position opérationnelle en regard d'un desdits sièges avant (41), qui constitue un siège de conduite, et une position non-opérationnelle en regard d'aucun desdits sièges avant (41).

4. Véhicule selon l'une quelconque des revendications précédentes, dans lequel ledit espace intérieur du châssis (10) derrière ledit au moins un siège avant (41) contient, dans la position déployée, au moins un siège arrière (42).

5. Véhicule selon l'une quelconque des revendications précédentes, dans lequel ledit châssis (10) contient deux sièges avant (41), le châssis (10) comporte deux portes latérales (21) sur des côtés opposés de celui-ci, et ledit espace intérieur du châssis (10) derrière lesdits deux sièges avant (41) contient au moins deux sièges arrière (42), accessibles à travers les deux portes latérales (21).

6. Véhicule selon la revendication 1, dans lequel ladite porte avant (20) contient un pare-brise et est articulée par une partie supérieure à la partie avant (11) du châssis ; et/ou
chaque porte latérale (21) intègre un panneau transparent et est articulée par une partie avant à ladite partie avant (11) du châssis.

7. Véhicule selon la revendication 1, dans lequel le châssis comporte un mécanisme d'extension bidirectionnel réversible actionnée par un actionneur (61) qui fournit le mouvement télescopique de ladite partie avant et ladite partie arrière du châssis, ou un mécanisme d'extension bidirectionnel réversible comprenant un assemblage à crémaillère et pignon intégré dans un plancher du châssis, actionné par un actionneur (61) ou actionné par un actionneur (61) consistant en un levier actionné manuellement accessible depuis ledit au moins un siège avant ou dans un actionneur électrique automatique, fournissant le mouvement télescopique de ladite partie avant (11) et ladite partie arrière (12) du châssis.

8. Véhicule selon la revendication 1, dans lequel ledit au moins un moteur électrique comprend au moins deux moteurs électriques indépendants, chacun relié à l'une des roues arrière (32).

9. Véhicule selon la revendication 11, dans lequel lesdites roues avant (31) :
• manquent de direction ; ou
• manquent de direction et présentent une largeur plus petite que les roues arrière (32) ; ou
• manquent de direction et ledit au moins un moteur électrique comporte également deux moteurs électriques indépendants, chacun relié à l'une des roues avant (31).

10. Véhicule selon la revendication 1, dans lequel les roues avant (31) et/ou les roues arrière (32) sont orientables.

11. Véhicule selon la revendication 1, dans lequel le véhicule comporte au moins un hayon arrière (22), ou au moins un hayon arrière comportant une fenêtre arrière, ou au moins un hayon arrière comportant un hayon supérieur consistant en, ou intégrant, une fenêtre arrière, articulé par une partie supérieure à la partie arrière du châssis, et optionnellement un hayon inférieur articulé par une part inférieure à la partie arrière du châssis, l'au moins un hayon arrière donnant accès audit espace intérieur du châssis (10) derrière ledit au moins un siège avant (41) à travers une partie arrière du véhicule.

12. Véhicule selon l'une quelconque des revendications précédentes, dans lequel les batteries électriques sont complètement supportées dans la partie avant (11) du châssis.

13. Véhicule selon l'une quelconque des revendications précédentes, dans lequel les roues avant (31), ou des passage de roue du châssis contenant les roues avant (31), font saillie vers l'avant par rapport à une région centrale de la partie avant du châssis contenant la porte avant (20), lesdites roues avant (31) ou lesdits passages de roue saillants agissant en tant que pare-chocs.

14. Véhicule selon l'une quelconque des revendications précédentes, dans lequel, dans la position rétractée, la partie avant (11) et la partie arrière (12) du châssis affleurent vers l'extérieur l'une par rapport à l'autre, une partie de la partie avant (11) étant contenue dans la partie arrière (12).

15. Véhicule selon l'une quelconque des revendications précédentes, dans lequel un dispositif de commande est configuré pour freiner les roues avant (31) et pour ne pas freiner les roues arrière (32), ou vice-versa, pendant le mouvement entre la position rétractée et la position déployée, et pour actionner les roues avant ou arrière non freinées (31, 32) pour faciliter ou produire le mouvement entre la position rétractée et la position déployée.
